**Europäisches Patentamt**

**European Patent Office**

**Office européen des brevets**

(19)

(11) Publication number: **0 017 435**
**B1**

(12) **EUROPEAN PATENT SPECIFICATION**

(45) Date of publication of patent specification: **13.06.84**

(51) Int. Cl.³: **B 29 J 5/00, E 04 C 2/26**

(21) Application number: **80300962.0**

(22) Date of filing: **28.03.80**

(54) Improvements relating to a method of manufacture of structural board panels and to board panels formed thereby.

(30) Priority: **30.03.79 GB 7911091**

(43) Date of publication of application:
**15.10.80 Bulletin 80/21**

(45) Publication of the grant of the patent:
**13.06.84 Bulletin 84/24**

(84) Designated Contracting States:
**DE GB SE**

(56) References cited:
**DE - A - 1 759 417**
**DE - C - 869 767**
**FR - A - 992 757**
**GB - A - 840 129**
**GB - A - 1 407 770**

(73) Proprietor: **BORFGLACE LIMITED**
**66 Mark Lane**
**London EC3P 3EA (GB)**

(72) Inventor: **Wright, Charles Leonard**
**15 Silverdale Close**
**Pagham Sussex (GB)**

(74) Representative: **Lewis, David Overington**
**c/o Babcock & Wilcox Limited Cleveland House**
**19 St. James's Square**
**London SW1Y 4LN (GB)**

Courier Press, Leamington Spa, England.

## Description

This invention relates to structural board panels formed from cellulosic materials for construction of buildings together with methods of forming the panels.

According to the present invention there is provided a method of forming a structural board panel including the steps of forming a loose mat of overlapping strands of cellulosic material to which a resin adhesive has been applied, compressing and curing the mat to give an open structured block, applying to a face of the block of portland cement screed layer to penetrate into the interstices between the strands, providing a rendering of portland cement on the screed layer, and adding into the rendering resinated filamentary material as a reinforcement.

By way of example, in one embodiment of the invention a structural board panel having a finished thickness of 100 mm is formed by firstly collecting together on a support surface strands of bagasse to which a resin adhesive has been applied, and overlapping the strands to form a loosely packed mat. The mat is then compressed and cured to give an open structured block having a density of between 160 and 400 Kg/m³, preferably 240 kg/m³ and a surface aperture of between 25 and 75%. The block is then removed from the support surface. A screed layer of mortar of portland cement and sand, approximately in the ratio 1:3, is then applied to one face of the block to penetrate interstices between the strands to a depth of between 5 and 25 mm, preferably 15 mm. A rendering layer is then applied to the screen layer, the rendering layer is formed from mortar and has a thickness of between 3 and 15 mm, preferably less than 5 mm. A reinforcement of a loose net of three strand nylon filaments at approximately 15 mm regular pitching is then laid on the rendering layer. Finally a facing layer of mortar is applied onto the rendering layer to cover the reinforcement of nylon filaments. The facing layer having a thickness of between 3 and 15 mm preferably less than 6 mm.

Conveniently the thickness of the rendering layer and the facing layer is controlled by forming the mat oversize in length and breadth and then clamping a first set of steel formers or templates of appropriate thickness on and in register with the edge portion of the mat. The rendering layer is then applied between the formers and levelled with a doctor blade or scraper using the first set of formers as a guide. Before the rendering layer sets, a second set of steel formers or templates of appropriate thickness is then clamped in register with the first set of formers and the loose net of nylon filaments is then applied on the rendering layer, after which the facing layer is applied and levelled with the doctor blade or scraper using the second set of formers as a guide. Following setting of the rendering layer and the facing layer the first and second set of formers are removed and the panel cut down to size.

Tests upon a sample structural board panel having a finished thickness of 100 mm gave satisfactory results for fire resistance, a 'U' value of between .64 and .66 was obtained and the sample was dimensionally stable against thermal or moisture movement.

Prior to placement on the rendering layer of mortar, the loose net of nylon filaments is coated with resin and then part cured to an advanced stage of polymerisation, to avoid water migration and effects arising from the composition of the cement when deposited on the rendering layer and impregnated with the cement, sand and water mix of the facing layer. A water soluble, phenol free resorcinol formaldehyde novalac resin cross-linked with formaldehyde or paraform is used and, since the setting reaction of both the cement and the resin are exothermic, with the resin having a faster reaction time, the two reactions are arranged to mutually assist each other to obtain a satisfactory bonding and a faster stabilisation time compared with the corresponding individual stabilisation time. The water content of the cement and resin mixtures is determined by the need to avoid over dilution of the resin, which would weaken adhesion between the resin and the filaments, and restricting the rates of exothermal heat release in order to achieve high strength properties. A fungicide may be added without interfering with the reactions and strength properties.

Structural board panels having a screed layer followed by a rendering layer onto which is laid a loose net of nylon filaments and which is covered by a facing layer as described in the preceding paragraphs, and having a finished thickness of 100 mm, a width of 600 mm and a length of 2400 mm, may be expected to have an ultimate bending strength which is increased by a factor of 8.5 compared with a block of the same dimensions formed from strands of bagasse to which a resin adhesive has been applied but to which no screed or other layers have been applied. Additionally the structural board panels may be expected to withstand an external filament stress of 18N/m². Also a further increase in the ultimate bending strength of the structural board panel may be obtained by applying a screed layer onto each of two opposed faces of the block bagasse, followed by applying a rendering layer onto each screed layer and laying onto each rendering layer a loose net of nylon filaments as a reinforcement and covering each rendering layer with a facing layer.

It will also be appreciated that strands of cellulosic material other than bagasse, such as wood, may be utilised to form the blocks. Furthermore, other materials such a polypropylene, sisal, carbon fibre or glass fibre, may be utilised for reinforcement and the reinforcement may be incorporated directly into the facing layer.

Although in preceding paragraphs an embodiment of the invention has been described in which the screed layer, the rendering layer and the facing layer are discrete layers, with a reinforcement in the form of a loose net of nylon filaments laid between the rendering layer and the facing layer it should be understood that the rendering layer and the facing layer may be combined together to give a rendering over the screed layer and that nylon filaments may be added as a reinforcement to the rendering.

## Claims

1. A method of forming a structural board panel including the steps of forming a loose mat of overlapping strands of cellulosic material to which a resin adhesive has been applied, compressing and curing the mat to give an open structural block, applying to a face of the block a portland cement screed layer to penetrate into the interstices between the strands, providing a rendering of portland cement on the screed layer, and adding into the rendering resinated filamentary material as a reinforcement.

2. A method of forming a structural board panel as claimed in Claim 1, wherein the rendering includes a rendering layer and a facing layer.

3. A method of forming a structural board panel as claimed in Claim 1 or Claim 2, wherein resin is applied to the filamentary material and allowed to cure partially to an extent sufficient to achieve adhesion before the resinated filamentary material is added to the portland cement of the rendering.

4. A method of forming a structural board panel as claimed in Claim 3, wherein the resinated filamentary material is added to the portland cement of the rendering during the curing of the resin so that the exothermic reactions of the resin and portland cement of the rendering are arranged to mutually assist each other.

5. A method of forming a structural board panel as claimed in any one of the preceding claims, wherein the filamentary material is in the form of nylon filaments.

6. A method of forming a structural board panel as claimed in Claim 5, wherein the nylon filaments are coated with a water soluble phenol free resorcinol formaldehyde novalac resin cross linked with formaldehyde or paraform.

7. A method of forming a structural board panel as claimed in Claim 5 or Claim 6, wherein the reinforcement of nylon filaments is in the form of an open mesh net.

8. A method of forming a structural board panel as claimed in any one of the preceding claims, wherein the method includes the steps of applying a portland cement screed layer to each of two opposed faces of the block, providing the rendering of portland cement on each of the screed layers, and adding into the rendering resinated filamentary material as a reinforcement.

9. A method of forming a structural board panel including forming a loose mat of overlapping strands of cellulosic material to which a resin adhesive has been applied, compressing and curing the mat to give an open structured block having a density of between 160 and 400 kg/m$^3$ and surface aperture of between 15% and 75%, applying a portland cement screed layer to one face of the block to penetrate interstices between the strands to a depth of between 5 and 25 mm, applying a portland cement rendering layer onto the screed layer to a thickness of between 3 and 15 mm, laying an open mesh net of nylon filaments coated with a water soluble, phenol free, resorcinol formaldehyde novalac resin cross-linked with formaldehyde or paraform and partially cured onto the rendering layer and then applying a portland cement facing layer over the open mesh net of nylon filaments to a thickness of between 3 and 15 mm.

10. A method of forming a structural board panel as claimed in Claim 9, wherein the method includes the steps of applying a portland cement screed layer to each of two opposed faces of the block, applying a portland cement rendering layer to each of the two screed layers, laying an open mesh net of nylon filaments onto each of the rendering layers, and applying a facing layer over each of the rendering layers and open mesh nets.

## Revendications

1. Procédé de façonnage d'un panneau de planche de construction caractérisé en ce qu'il comporte les opérations consistant à former un mat lâche de brins chevauchants de matière cellulosique sur lesquels on a appliqué un adhésif de résine, comprimer et faire durcir le mat pour obenir un bloc de construction à pores ouverts, appliquer sur une face du bloc une couche à talocher de portland pour qu'elle pénètre dans les interstices séparant les brins, faire un enduit de portland sur la couche à talocher et ajouter dans l'enduit de la matière filamenteuse résinée en tant qu'armature.

2. Procédé de façonnage de panneau de planche de construction selon la revendication 1, caractérisé en ce que l'enduit comporte une couche d'enduit et une couche de parement.

3. Procédé de façonnage de panneau de planche de construction selon la revendication 1 ou 2, caractérisé en ce qu'on applique de la résine sur la matière filamenteuse et on la laisse durcir partiellement dans une mesure suffisante pour assurer l'adhésion, avant d'ajouter la matière filamenteuse résinée au portland de l'enduit.

4. Procédé de façonnage de panneau de planche de construction selon la revendication 3, caractérisé en ce qu'on ajoute la matière filamenteuse résinée au portland de l'enduit pendant le durcissement de la résine de façon à faire en sorte que les réactions exothermiques de la résine et du portland de l'enduit s'assistent mutuellement.

5. Procédé de façonnage de panneau de planche de construction selon l'une quelconque des revendications précédentes, caractérisé en ce que la matière filamenteuse est sous la forme de filaments de Nylon.

6. Procédé de façonnage de panneau de planche de construction selon la revendication 5, caractérisé en ce qu'on revêt les filaments de Nylon d'une résine novolaque résorcinol-formaldéhyde exempte de phénol, soluble dans l'eau, réticulée au formaldéhyde ou au paraforme.

7. Procédé de façonnage de panneau de planche de construction selon la revendication 5 ou 6, caractérisé en ce que l'armature de filaments de Nylon est sous forme de résille à mailles ouvertes.

8. Procédé de façonnage de panneau de planche de construction selon l'une quelconque des revendications précédentes, caractérise en ce qu'il comporte les opérations consistant à appliquer une couche à talocher de portland sur chacune de deux faces opposées du bloc, faire un enduit de portland sur chacune des couches à talocher, et ajouter dans l'enduit, de la matière filamenteuse résinée en tant qu'armature.

9. Procédé de façonnage de panneau de planche de construction caractérisé en ce qu'il comporte la formation d'un mat lâche de brins chevauchants de matière cellulosique sur lesquels on a appliqué un adhésif de résine, de compression et de durcissement du mat en vue de l'obtention d'un bloc à structure à pores ouverts ayant une densité de 0,160 à 0,400 kg/m³ et une ouverture de surface de 15 à 75 %, l'application d'une couche à talocher de portland sur une face du bloc pour qu'elle pénètre dans les interstices séparant les brins jusqu'à une profondeur de 5 à 25 mm, l'application d'une couche d'enduit de portland sur la couche à talocher sur une épaisseur de 3 à 15 mm, la pose d'une résille à mailles ouvertes de filaments de Nylon revêtus d'une résine novolaque résorcinol-formaldéhyde exempt de phénol, soluble dans l'eau, réticulée au formaldéhyde ou au paraforme et partiellement durcie sur la couche d'enduit puis l'application d'une couche de portland de parement sur la résille à mailles ouvertes de filaments de Nylon sur une épaisseur de 3 à 15 mm.

10. Procédé de façonnage de panneau de planche de construction selon la revendication 9, caractérisé en ce qu'il comporte les opérations d'application d'une couche à talocher de portland sur chacune de deux faces opposées du bloc, d'application d'une couche d'enduit de portland sur chacune des deux couches à talocher, de pose d'une résille à mailles ouvertes de filaments de Nylon sur chacune des couches d'enduit, et d'application d'une couche de parement sur chacune des couches d'enduit et résilles à mailles ouvertes.

**Patentansprüche**

1. Verfahren zur Herstellung einer Wandbauplatte mit folgenden Schritten: eine lose Matte von sich überlappenden Strängen von Zellulosematerial, dem eine Kunststoffkleber zugefügt ist, wird gebildet; die Matte wird zur Bildung eines offenporigen Baublockes gepreßt und aushärten lassen; auf einer Seite des Blockes wird eine Strichschicht aus Portlandzement aufgebracht, um in die Zwischenräume der Stränge einzudringen; ein Bewurf von Portlandzement wird auf die Strichschicht aufgebracht; in den Bewurf wird mit Kunstharz versehenes Fasermaterial als Verstärkung zugefügt.

2. Verfahren zur Herstellung einer Wandbauplatte nach Anspruch 1, wobei der Bewurf eine Rohbewurfsschicht und eine Fassadenschicht aufweist.

3. Verfahren zur Herstellung einer Wandbauplatte nach Anspruch 1 oder 2, wobei aushärtbarer Kunststoff dem Fasermaterial zugefügt und teilweise aushärten lassen wird, und zwar soweit daß genügende Adhäsion erzielt wird, bevor das mit Kunststoff oder Kunstharz versetzte Fasermaterial dem Portlandzement des Bewurfs zugefügt wird.

4. Verfahren zur Herstellung einer Wandbauplatte nach Anspruch 3, wobei das mit Kunststoff oder Kunstharz versehene Fasermaterial dem Portlandzement des Bewurfs während der Aushärtung des Kunststoffs bzw. Kunstharzes zugefügt wird, so daß die exothermen Reaktionen des Kunststoffes und des Portlandzements des Bewurfs einander begünstigen.

5. Verfahren zur Herstellung einer Wandbauplatte nach einem der vorhergehenden Ansprüche, wobei das Fasermaterial in der Form von Polyamidfäden vorliegt.

6. Verfahren zur Herstellung einer Wandbauplatte nach Anspruch 5, wobei die Polyamidfäden mit einem wasserlöslichen, phenolfreien Resorzinol-Formaldehydnovalakkunststoff beschichtet sind, der mit Formaldehyd oder Paraform vernetzt ist.

7. Verfahren zur Herstellung einer Wandbauplatte nach Anspruch 5 oder 6, wobei die Verstärkung aus Polyamidfäden in Form eines offenen Maschennetzes vorliegt.

8. Verfahren zur Herstellung einer Wandbauplatte nach einem der vorhergehenden Ansprüche, wobei das Verfahren noch folgende Schritte umfaßt: die Strichschicht aus Portlandzement wird auf beiden gegenüberliegenden Seiten des Blockes angewendet; der Bewurf des Portlandzements wird auf jeder der beiden Strichschichten angewendet und in den Bewurf wird mit Kunstharz versehenes Fasermaterial als Verstärkung zugefügt.

9. Verfahren zur Herstellung einer Wandbauplatte mit folgenden Merkmalen: es wird eine lose Matte aus sich überlappenden Strängen von Zellulosematerial gebildet, dem ein Kunststoffkleber zugefügt ist; die Matte wird zum Erhalt eines offenporigen Baublocks verpreßt und aushärten lassen, der eine Dichte zwischen 160 und 400 kg/m³ und eine Oberflächenporigkeit zwischen 15 % und 75 % aufweist; eine Strichschicht aus Portlandzement wird auf einer Seite des blocks aufgebracht, um in die Zwischenräume der Stränge bis zu einer Tiefe von 5 bis 25 mm enzudringen; eine Rohbewurfsschicht aus Portlandzement wird auf die Strichschicht mit einer Dicke zwischen 3 und 15 mm aufgebracht; ein offenmaschiges Netz von Polyamidfäden, die mit einem wasserlöslichen, phenolfreien Resorzinolformaldehydnovalakkunststoff beschichtet sind und mit Formaldehyd oder Paraform vernetzbar sind, wird aufgelegt und teilweise an die Rohbewurfsschicht beim Aushärten ankleben lassen; anschließend wird eine Fassadeschicht aus Portlandzement über das offenmaschige Netz der Polyamidfäden bis zu einer Dicke zwischen 3 und 15 mm aufgebracht.

10. Verfahren zur Herstellung einer Wandbauplatte nach Anspruch 9, wobei das Verfahren folgende weitere Schritte umfaßt: eine Strichschicht aus Portlandzement wird auf beiden Seiten des Blockes angewendet; eine Rohbewurfsschicht aus Portlandzement wird auf beide Strichschichten aufgebracht; ein offenmaschiges Netz von Polyamidfäden wird auf jede der beiden Rohberwurfsschichten aufgelegt und eine Fassadeschicht wird über jede der beiden Rohbewurfsschichten und offenmaschigen Netze aufgebracht.